Europäisches Patentamt

European Patent Office

Office européen des brevets

(19)

(11) EP 0 580 498 B1

(12) FASCICULE DE BREVET EUROPEEN

(45) Date de publication et mention
de la délivrance du brevet:
03.04.1996 Bulletin 1996/14

(51) Int Cl.6: F17C 13/00, H01F 6/00,
H02G 15/34, H01R 4/68

(21) Numéro de dépôt: 93401868.0

(22) Date de dépôt: 20.07.1993

(54) **Amenée de courant métallique pour système cryogénique**

Metallische Stromzuleitung für Kryogenes System

Metallic current lead for cryogenic system

(84) Etats contractants désignés:
AT BE CH DE DK ES FR GB GR IE IT LI LU MC
NL PT SE

(30) Priorité: 22.07.1992 FR 9209046

(43) Date de publication de la demande:
26.01.1994 Bulletin 1994/04

(73) Titulaire: GEC ALSTHOM
ELECTROMECANIQUE SA
F-75116 Paris (FR)

(72) Inventeurs:
• Cottevieille, Christian
  F-93100 Montreuil sous Bois (FR)
• Herrmann, Peter
  F-91410 Corbreuse (FR)
• Verhaege, Thierry
  F-91160 Saulx Les Chartreux (FR)

(74) Mandataire: Laroche, Danièle
c/o SOSPI
14-16 rue de la Baume
F-75008 Paris (FR)

(56) Documents cités:
EP-A- 0 487 043          FR-A- 2 262 855

• PATENT ABSTRACTS OF JAPAN vol. 013, no.
295 (E-783)7 Juillet 1989 & JP-A-10 76 707 (
MITSUBISHI ELECTRIC CORP. ) 22 Mars 1989

## Description

La présente invention concerne une amenée de courant métallique pour système cryogénique.

Avant l'apparition des supraconducteurs à haute température critique, les systèmes utilisant les supraconducteurs ou les hyperconducteurs fonctionnant à très basse température (par exemple 4.2 K, température de l'hélium liquide) étaient exclusivement alimentés par des amenées de courant métalliques refroidies par les vapeurs du liquide cryogénique évaporé. Les besoins cryogéniques en résultant sont importants et ne peuvent être réduits en-dessous d'une certaine limite, à cause du lien existant pour un métal entre la conductivité électrique et la conductivité thermique (Loi de Wiedemann Franz).

Ainsi, une amenée de courant en cuivre (par exemple en cuivre OFHC), fonctionnant entre 4.2 K et 300 K et optimisée pour 1000 ampères, dissipe 1 watt dans l'hélium liquide et utilise les vapeurs produites pour son refroidissement. La charge de refroidissement et de liquéfaction de ces vapeurs est de 3 kW électriques. De plus cette technique est encombrante car elle utilise une longueur de conducteur importante pour obtenir un échange thermique efficace entre les vapeurs du fluide cryogénique évaporé et ce conducteur.

Avec l'apparition des céramiques supraconductrices à haute température critique (exemple 93 K pour l'$YBa_2Cu_3O_{0.9}$) des applications futures à une température intermédiaire (par exemple 77 K température de l'azote liquide) deviennent possibles ; elles nécessitent la réalisation d'amenées de courant métalliques fonctionnant entre 77 K et 300 K. De même pour les systèmes actuels de technologie basse température critique, il est envisagé de réaliser des amenées de courant mixtes, comprenant un supraconducteur à haute température critique entre la très basse température (4.2 K) et la température intermédiaire (77 K), complété par une amenée métallique entre la température intermédiaire et la température ambiante (300 K), comme indiqué dans le brevet FR-A-2678420. Cette amenée de courant métallique qui utilise les vapeurs du fluide cryogénique évaporé présente donc les mêmes inconvénients que l'amenée de courant entre 4.2 K et 300 K qui viennent d'être exposés.

La présente invention a pour but de réaliser une amenée de courant pour système cryogénique, qui soit beaucoup plus compacte et d'une construction plus simple que les amenées de courant connues, tout en maintenant une bonne performance énergétique de l'ensemble.

La présente invention a pour objet une amenée de courant métallique pour système cryogénique comprenant un conducteur dont une première extrémité est destinée à être connectée à un câble d'alimentation électrique situé dans un premier milieu à la température ambiante et dont une seconde extrémité est destinée à être connectée à une utilisation située dans un second milieu à 77 K, caractérisée par le fait que ledit conducteur a la forme d'un barreau métallique dont la paroi latérale est isolée thermiquement et dont les faces extrêmes sont solidarisées respectivement à deux échangeurs thermiques métalliques, l'un baignant dans ledit premier milieu et l'autre dans ledit second milieu.

Avantageusement, le métal dudit barreau a une résistivité à 300 K comprise entre $10^{-8}$ $\Omega$ m et $10^{-6}$ $\Omega$ m.

De préférence, ledit barreau est en laiton ou en acier inoxydable, mais il peut être aussi en cuivre, ou en bronze.

Une telle amenée de courant ne nécessite pas de refroidissement interne et n'est refroidie que par conduction au niveau de son extrémité située dans l'azote liquide.

Elle permet d'obtenir un gain au niveau de l'encombrement d'au moins un facteur 10, vis-à-vis des amenées de courant de l'art antérieur, sans accroître de façon notable le coût cryogénique.

Une amenée de courant selon l'invention a l'avantage de pouvoir être montée dans les situations les plus variées et d'accepter toute inclinaison.

Tous ces avantages sont la conséquence du fait que l'on n'utilise plus l'enthalpie des vapeurs cryogéniques pour refroidir l'amenée de courant.

Bien que les pertes en azote soient augmentées par rapport à une solution utilisant les gaz du liquide cryogénique, cette augmentation reste dans des proportions tolérables, compte tenu des avantages considérables apportés par l'invention au niveau de l'encombrement.

En outre, dans le cas d'alimentation électrique à régimes variables, une amenée de courant selon l'invention est susceptible de supporter des surintensités plus importantes qu'une amenée de courant conventionnelle.

Si on appelle L la longueur dudit barreau, S sa section transversale et I le courant qu'il transporte entre 77 K et 300 K, le rapport $\frac{LI}{S}$ est optimisé. Ainsi, à titre d'exemple on choisit selon l'invention :

- pour le laiton un barreau tel que $\frac{LI}{S}$ soit compris entre $5.10^6$ A/m et $10^7$.A/m
- pour l'acier inoxydable un barreau tel que $\frac{LI}{S}$ soit compris entre $5.10^4$ A/m et $10^5$ A/m.

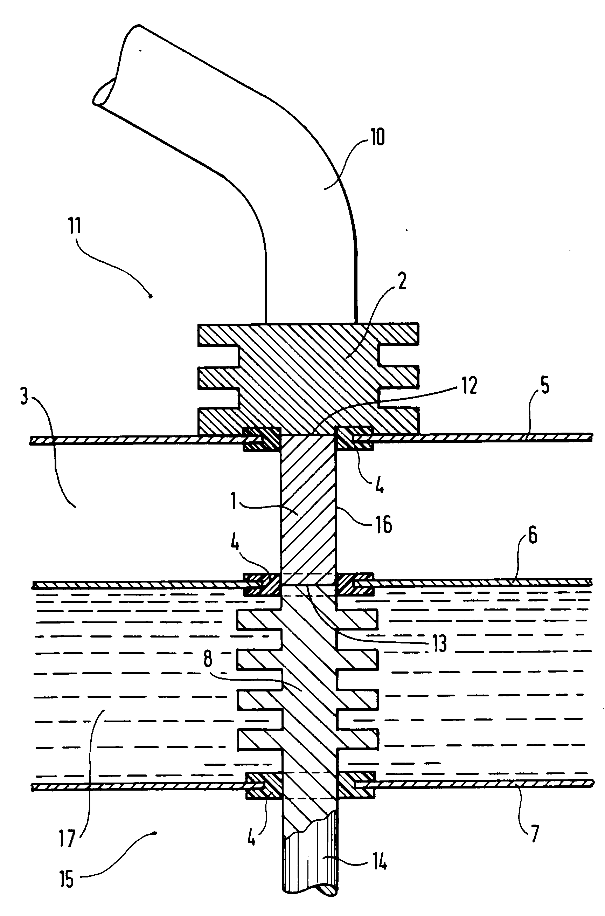

D'autres caractéristiques et avantages de la présente invention apparaîtront au cours de la description suivante d'un mode de réalisation, donné à titre illustratif mais nullement limitatif schématisé dans la figure unique annexée.

L'amenée de courant selon l'invention est destinée à relier un câble d'alimentation 10 situé dans un milieu 11 à la température ambiante, à une utilisation 14 située dans un milieu 15 à la température 77 K (on notera I l'intensité du courant transporté). Cette amenée comporte un barreau massif en laiton 1, de section S et de longueur L, dont la face latérale 16 est isolée thermiquement dans le vide 3, qui peut être la garde de vide d'un cryostat dont on a référencé des parois métalliques 5, 6, 7 ; tout autre isolant thermique approprié peut être envisagé, par exemple le polystyrène expansé.

Les faces extrêmes 12 et 13 du barreau 1 sont liées par soudage, ou tout autre procédé approprié, respectivement à des échangeurs thermiques à ailettes 2 et 8. Le barreau et les échangeurs thermiques peuvent former une seule et même pièce. L'échangeur 2 connecté au câble d'alimentation 10 est à la température ambiante, tandis que l'échangeur 8, connecté à l'utilisation 14, est plongé dans l'azote liquide 17.

L'isolation électrique de la structure au niveau des parois 5, 6, 7 est assurée par des supports 4 en matériau de type téflon, résine époxyde, verre, céramique, ou analogue.

Exemple I

Le barreau 1 est un cylindre en laiton de diamètre égal à 14,3 mm et de longueur L égale à 0,1 m ; le courant I est de 1000 A. Cette amenée de courant est optimisée à un rapport $\frac{LI}{S} = 7.10^5$ A/m et dissipe 41,5 watts dans l'azote liquide. Comme elle n'est pas refroidie par les vapeurs, elle s'adapte particulièrement bien aux installations fonctionnant en "réfrigérateur", c'est-à-dire dans lesquelles une machine cryogénique liquéfie les vapeurs récupérées à 77 K. Dans ce cas particulier la charge de liquéfaction est de 415 watts électriques.

Une telle amenée de courant permet d'obtenir un gain d'encombrement d'un facteur 10 vis-à-vis d'un conducteur en cuivre de l'art antérieur utilisant les vapeurs du fluide cryogénique, pour être refroidi, alors que le coût cryogénique n'est multiplié que d'un facteur 1,2 environ.

Exemple II

Dans cette amenée de courant le barreau 1 est un cylindre en acier inoxydable, par exemple de type 304L. Son diamètre est de 39,9 mm et sa longueur L est de 0,1 mètre. Lorsqu'elle est optimisée pour 1000 ampères, le rapport $\frac{LI}{S}$ est de 8 x $10^4$ A/m, et elle dissipe 59,8 watts dans l'azote liquide. Il en résulte une charge de liquéfaction de 598 watts électriques.

On a encore un gain d'encombrement d'un facteur 10, vis-à-vis d'une amenée de courant de l'art antérieur, avec un coût cryogénique augmenté seulement d'un rapport 1,7.

Exemple III

On réalise pour l'amenée de courant un barreau 1 en acier inoxydable susceptible de transporter 1000 ampères, et présentant une longueur de 0,05 mètre et un diamètre de 28,2 mm.

On a alors le même coût cryogénique que pour l'amenée de courant antérieure, avec un gain d'encombrement d'un facteur 20.

**Revendications**

1. Amenée de courant métallique pour système cryogénique comprenant un conducteur dont une première extrémité est destinée à être connectée à un câble d'alimentation électrique (10) situé dans un premier milieu (11) à la température ambiante et dont une seconde extrémité est destinée à être connectée à une utilisation (14) située dans un second milieu (15) à 77 K, caractérisée par le fait que ledit conducteur a la forme d'un barreau métallique (1) dont la paroi latérale est isolée thermiquement et dont les faces extrêmes (12, 13) sont solidarisées respectivement à deux échangeurs thermiques métalliques (2, 8), l'un baignant dans ledit premier milieu et l'autre dans ledit second milieu.

2. Amenée de courant métallique selon la revendication 1, caractérisée par le fait que le métal dudit barreau a une résistivité à 300 K comprise entre $10^{-8}$ $\Omega$ m et $10^{-6}$ $\Omega$ m.

3. Amenée de courant métallique selon la revendication 1, caractérisée par le fait que le métal dudit barreau est choisi parmi le laiton, l'acier inoxydable, le bronze, le cuivre.

4. Amenée de courant métallique selon l'une des revendications précédentes, caractérisée par le fait que, ledit barreau présentant une longueur L et une section transversale S entre 300 K et 77 K, et étant susceptible d'être traversé par un courant d'intensité I, le rapport $\frac{LI}{S}$ est optimisé.

5. Amenée de courant métallique selon la revendication 4, caractérisée par le fait que pour un barreau en laiton, le rapport $\frac{LI}{S}$ est compris entre 5.$10^6$ A/m et $10^7$ A/m.

6. Amenée de courant métallique selon la revendication 1, caractérisée par le fait que, pour un barreau en acier inoxydable, le rapport $\frac{LI}{S}$ est compris entre 5.$10^4$ A/m et $10^5$ A/m.

**Patentansprüche**

1. Metallische Stromzuführung für ein Kryosystem mit einem Leiter, dessen erstes Ende an ein elektrisches Speisekabel (10) in einem ersten Milieu (11) bei Umgebungstemperatur und dessen zweites Ende an eine Last (14) angeschlossen werden soll, die sich in einem zweiten Milieu (15) bei 77K befindet, dadurch gekennzeichnet, daß der Leiter die Form eines metallischen Stabs (1) aufweist, dessen seitliche Oberfläche thermisch isoliert ist und dessen Stirnseiten (12, 13) mit zwei metallischen Wärmetauschern (2, 8) fest verbunden sind, von denen der eine sich im ersten Milieu und der andere sich im zweiten Milieu befindet.

2. Metallische Stromzuführung nach Anspruch 1, dadurch gekennzeichnet, daß das Metall des Stabs einen spezifischen elektrischen Widerstand bei 300K zwischen $10^{-8}$ und $10^{-6}$ $\Omega$m aufweist.

3. Metallische Stromzuführung nach Anspruch 1, dadurch gekennzeichnet, daß das Metall des Stabs aus Messing, rostfreiem Stahl, Bronze oder Kupfer ausgewählt wird.

4. Metallische Stromzuführung nach einem der vorhergehenden Ansprüche, dadurch gekennzeichnet, daß das Verhältnis LI/S optimiert ist, wobei L die Länge des Stabs, S die Querschnittsfläche des Stabs zwischen 300K und 77K und I die Stärke des Stroms bedeutet, die durch den Stab fließen kann.

5. Metallische Stromzuführung nach Anspruch 4, dadurch gekennzeichnet, daß für einen Messingstab das Verhältnis LI/S zwischen $5 \cdot 10^6$ und $10^7$ A/m liegt.

6. Metallische Stromzuführung nach Anspruch 4, dadurch gekennzeichnet, daß für einen Stab aus rostfreien Stahl das Verhältnis LI/S zwischen $5 \cdot 10^4$ und $10^5$ A/m liegt.

**Claims**

1. Metallic current lead for cryogenic systems comprising a conductor a first end of which is adapted to be connected to an electrical power cable (10) in a first environment (11) at ambient temperature and a second end of which is adapted to be connected to a load (14) in a second environment (15) at 77 K, characterised in that said conductor has the form of a metal bar (1) the lateral wall of which is thermally insulated and the end faces (12, 13) of which are attached to respective metallic heat exchangers (2, 8), one in said first environment and the other in said second environment.

2. Metallic current lead according to claim 1 characterised in that the metal of said bar has a resistivity at 300 K between $10^{-8}$ $\Omega$m and $10^{-6}$ $\Omega$m.

3. Metallic current lead according to claim 1 characterised in that the metal of said bar is brass, stainless steel, bronze or copper.

4. Metallic current lead according to any one of the preceding claims characterised in that, said bar having a length L and a cross-section S between 300 K and 77 K, and being adapted to carry a current I, the ratio LI/S is optimised.

5. Metallic current lead according to claim 4 characterised in that for a brass bar the ratio LI/S is between $5.10^6$ A/m and $10^7$ A/m.

6. Metallic current lead according to claim 1 characterised in that for a stainless steel bar the ratio LI/S is between $5.10^4$ A/m and $10^5$ A/m.